Europäisches Patentamt

**European Patent Office**

Office européen des brevets

(19)

(11) Veröffentlichungsnummer: **0 038 952**
**B1**

(12) **EUROPÄISCHE PATENTSCHRIFT**

(45) Veröffentlichungstag der Patentschrift:
**16.05.84**

(51) Int. Cl.³: **F 16 L 11/18, H 02 G 11/00**

(21) Anmeldenummer: **81102479.3**

(22) Anmeldetag: **02.04.81**

(54) **Energieleitungsträger.**

(30) Priorität: **30.04.80 DE 3016628**
**30.04.80 DE 3016603**

(43) Veröffentlichungstag der Anmeldung:
**04.11.81 Patentblatt 81/44**

(45) Bekanntmachung des Hinweises auf die Patenterteilung:
**16.05.84 Patentblatt 84/20**

(84) Benannte Vertragsstaaten:
**AT BE CH DE FR GB IT LI NL SE**

(56) Entgegenhaltungen:
**DE - A - 2 622 005**
**DE - A - 2 805 832**
**DE - B - 1 250 711**
**DE - B - 1 574 369**
**US - A - 2 823 703**

(73) Patentinhaber: **Kabelschlepp Gesellschaft mit beschränkter Haftung, Marienborner Strasse 75, D-5900 Siegen 1 (DE)**

(72) Erfinder: **Moritz, Werner, Wetzlarer Strasse 122, D-5900 Siegen 1 (DE)**

(74) Vertreter: **Stenger, Alex, Dipl.-Ing. et al, Patentanwälte Dipl.-Ing. A. Stenger Dipl.-Ing. W. Watzke Dipl.-Ing. H.J. Ring Kaiser-Friedrich-Ring 70, D-4000 Düsseldorf 11 (DE)**

EP 0 038 952 B1

Energieleitungsträger

Die Erfindung betrifft einen Energieleitungsträger für die Anordnung zwischen einem beweglichen Verbraucher und einem ortsfesten Anschluß, bestehend aus engen Rohrgliedern mit nach außen gerichteten Anschlägen und weiten Rohrgliedern aus zwei Rohrgliedhälften mit nach innen gerichteten Anschlägen, die sich mit den Anschlägen hintergreifen und in einer Richtung gegeneinander abwinkelbar sind, und wobei durch die Anschläge der engen Rohrglieder eine Rinne gebildet wird, deren Breite den Krümmungsradius bestimmt.

Aus der DE-A-28 05 832 ist ein Energieleitungsträger der vorstehend beschriebenen Gattung bekannt. Bei diesem Energieleitungsträger sind die engen Rohrglieder symmetrisch ausgebildet, während die weiten Rohrglieder in Längsrichtung des Energieleitungsträgers gesehen beiderseits um die Hälfte der Breite der Rinne verkürzt sind, damit der Energieleitungsträger aus der gestreckten Lage nur zu einer Seite hin gekrümmt werden kann. Wenn bei diesem bekannten Energieleitungsträger die beiden Rohrgliedhälften der weiten Rohrglieder in einer senkrecht zur Krümmungsebene angeordneten Mittelebene miteinander oder an den engen Rohrgliedern befestigt werden, können sie zwar aus baugleichen Konstruktionsteilen bestehen, müssen aber im Bereich einer Querschnittshälfte verkürzt, also unsymmetrisch ausgebildet sein. Da es sich bei diesem bekannten Energieleitungsträger als zweckmäßig erwiesen hat, die Verbindung zwischen den Rohrgliedhälften der weiten Rohrglieder möglichst in die Krümmungsebene oder doch zumindest in eine parallel dazu verlaufende Ebene zu verlegen, weil in diesem Bereich die Beanspruchung der Verbindung am geringsten ist, bestehen die Rohrgliedhälften der weiten Rohrglieder aus verschieden breiten Konstruktionsteilen.

Davon ausgehend liegt der Erfindung die Aufgabe zugrunde, den bekannten Energieleitungsträger so zu verbessern, daß die Rohrgliedhälften der weiten Rohrglieder aus baugleichen und symmetrisch ausgebildeten Konstruktionsteilen bestehen können und der Energieleitungsträger eine gute Seiten- und Verdrehsteifigkeit besitzt.

Diese Aufgabe wird dadurch gelöst, daß die Rinne der engen Rohrglieder an zwei gegenüberliegenden Seitenwänden (Ober- und Unterseite) unterschiedlich breit und an den beiden anderen Seitenwänden keilförmig ausgebildet ist und daß die beiden Rohrgliedhälften der weiten Rohrglieder baugleich ausgebildet und um 180° gegeneinander versetzt auf die engen Rohrglieder aufgeschoben und miteinander verbunden sind.

Bei einem erfindungsgemäß ausgebildeten Energieleitungsträger ist also die umlaufende Rinne der engen Rohrglieder unterschiedlich breit ausgebildet, wobei die Keilform des Überganges zwischen dem breiten Teil an einer Seitenwand und dem engen Teil an der gegenüberliegenden Seitenwand gleichzeitig ein Maß für den Krümmungsradius ist. Dabei genügt es, den engen Teil der umlaufenden Rinne gerade so breit zu machen, daß die Anschläge der weiten Rohrglieder noch mit etwas Spiel eingreifen können. Da die engen Rohrglieder regelmäßig aus einem Kunststoff gespritzt werden, bereitet die Herstellung der Rinne mit unterschiedlicher Breite bzw. an zwei gegenüberliegenden Seitenwänden im Winkel zueinander verlaufenden Anschlägen keine Schwierigkeiten. Der Vorteil eines erfindungsgemäß ausgebildeten Energieleitungsträgers besteht nun darin, daß die beiden Rohrgliedhälften der weiten Rohrglieder baugleich sein und um 180° gegeneinander verdreht über den engen Rohrgliedern zusammengesteckt werden können. Auf diese Weise können sich abweichende Fertigungstoleranzen der unterschiedlich breit ausgebildeten Rohrgliedhälften bei der Montage nicht mehr störend auswirken. Schließlich besteht noch ein Vorteil des erfindungsgemäß ausgebildeten Energieleitungsträgers darin, daß die Rinne der engen Rohrglieder nur noch bei der Bewegung des Energieleitungsträgers im Krümmungsbereich geöffnet wird, während sie in den gestreckten Bereichen geschlossen ist und sich keine Fremdkörper mehr einlagern können.

Die baugleich ausgebildeten Rohrgliedhälften der weiten Rohrglieder können aus einem dünnen Blech oder aus Kunststoff hergestellt werden. In der Ausführungsform aus Blech wird die Verbindung mittels in den Überlappungsbereichen eingeführter Spreiznieten oder dgl. hergestellt. In der Ausführungsform aus Kunststoff kann eine Schnappverbindung verwendet werden, die aus einer Ausnehmung und einem Haken besteht. Damit die Schnappverbindung lösbar ist, kann die Ausnehmung mit einem Fenster angeschnitten werden, in welches der Haken einrastet und von außen her mit einem Werkzeug lösbar ist.

In weiterer Ausgestaltung der Rohrgliedhälften der weiten Rohrglieder aus Kunststoff hat es sich als zweckmäßig erwiesen, die Anschläge der engen Rohrglieder an der Ober- und Unterseite in der Mitte mit Nuten zu versehen und auf der Innenseite der Rohrgliedhälften der weiten Rohrglieder einen Steg anzuordnen, der in die Nuten eingreift. Durch den Eingriff der Stege in die Nuten der Anschläge wird die Torsionssteifigkeit des vollständig aus Kunststoff hergestellten Energieleitungsträgers wesentlich verbessert.

Für eine ausreichende Seiten- und Verdrehsteifigkeit bei übergroßen Längen hat es sich als zweckmäßig erwiesen, an der Ober- und der Unterseite der engen Rohrglieder innenliegende Schlitze anzuordnen und Bänder einzuziehen. In besonderen Anwendungsfällen kann es aber auch sinnvoll sein, weitere Zwischenbänder einzuziehen, um den Innenraum des Energieleitungsträgers in verschiedene Stockwerke für dicke und dünnere Kabel oder für Kabel und Schläuche aufzuteilen, damit diese beim bestimmungsgemäßen Gebrauch nicht ineinanderrutschen und/oder sich umeinanderdrehen.

Die Schlitze sollten zweckmäßig in der Mitte eng und zum Ein- und Austritt hin erweitert sein, damit die Bänder im Krümmungsradius nicht geknickt werden. Die Bänder selbst können sowohl aus Stahl als auch aus einem steifen aber auch elastischen Kunststoff hergestellt sein.

Ein erfindungsgemäß ausgebildeter Energieleitungsträger hat in der Ausführungsform mit je einem an der Oberseite und an der Unterseite eingezogenen Band auch auf großen Längen eine außerordentlich gute Seiten- und Verdrehsteifigkeit. Er kann deshalb auch bei Belastung mit hohen Gewichten eine größere freitragende Länge überbrücken.

Weitere Einzelheiten und Vorteile des Gegenstandes der Erfindung ergeben sich aus der nachfolgenden Beschreibung der Zeichnungen, in denen eine bevorzugte Ausführungsform des Energieleitungsträgers schematisch dargestellt worden ist. In den Zeichnungen zeigt

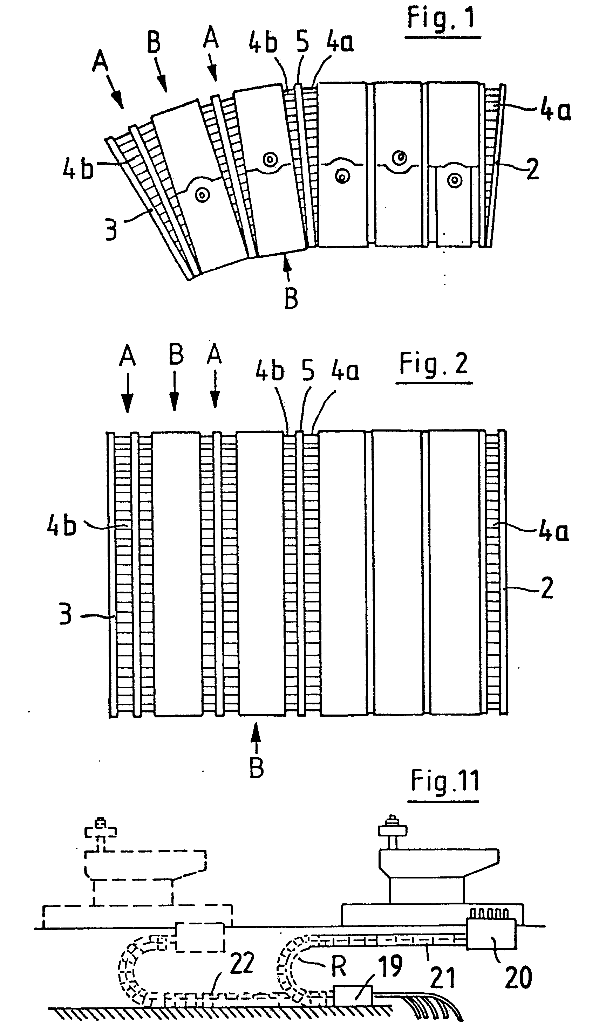

Fig. 1 einige miteinander verbundene Rohrglieder eines Energieleitungsträgers in Seitenansicht;

Fig. 2 dieselben Rohrglieder in Draufsicht;

Fig. 3 ein enges Rohrglied im Grundriß;

Fig. 4 dasselbe enge Rohrglied in Seitenansicht;

Fig. 5 ein Sprengbild eines aus zwei gleich ausgebildeten Rohrgliedhälften aus Blech zusammensetzbaren weiten Rohrgliedes in perspektivischer Darstellung;

Fig. 6 einige miteinander verbundene Rohrglieder eines Energieleitungsträgers, dessen weite Rohrglieder aus Kunststoff hergestellt sind;

Fig. 7 ein enges Rohrglied für die Ausführungsform gemäß Fig. 6 in perspektivischer Darstellung;

Fig. 8 eine Rohrgliedhälfte eines weiten Rohrgliedes aus Kunststoff in perspektivischer Darstellung;

Fig. 9 eine Schnappverbindung für die beiden Rohrgliedhälften eines weiten Rohrgliedes aus Kunststoff im Querschnitt;

Fig. 10 die Schnappverbindung gemäß Fig. 9 in Ansicht von außen;

Fig. 11 ein Funktionsschema für einen selbsttragenden Energieleitungsträger mit einem beweglichen Verbraucher und einem ortsfesten Anschluß;

Fig. 12 eine weitere Ausführungsform eines engen Rohrgliedes mit Schlitzen für ein einziehbares Band im Grundriß;

Fig. 13 ein gemäß Fig. 12 abgewandeltes enges Rohrglied mit in mehreren Stockwerken eingezogenen Bändern im Grundriß.

Ein erfindungsgemäß ausgebildeter Energieleitungsträger besteht aus einer wechselnden Folge von engen Rohrgliedern A und weiten Rohrgliedern B, die formschlüssig zusammengesteckt sind und aus der gestreckten Lage nur zu einer Seite hin gegeneinander verschwenkt werden können, während sie in der gestreckten Lage zu den anderen drei Seiten hin einen starren Rohrstrang bilden.

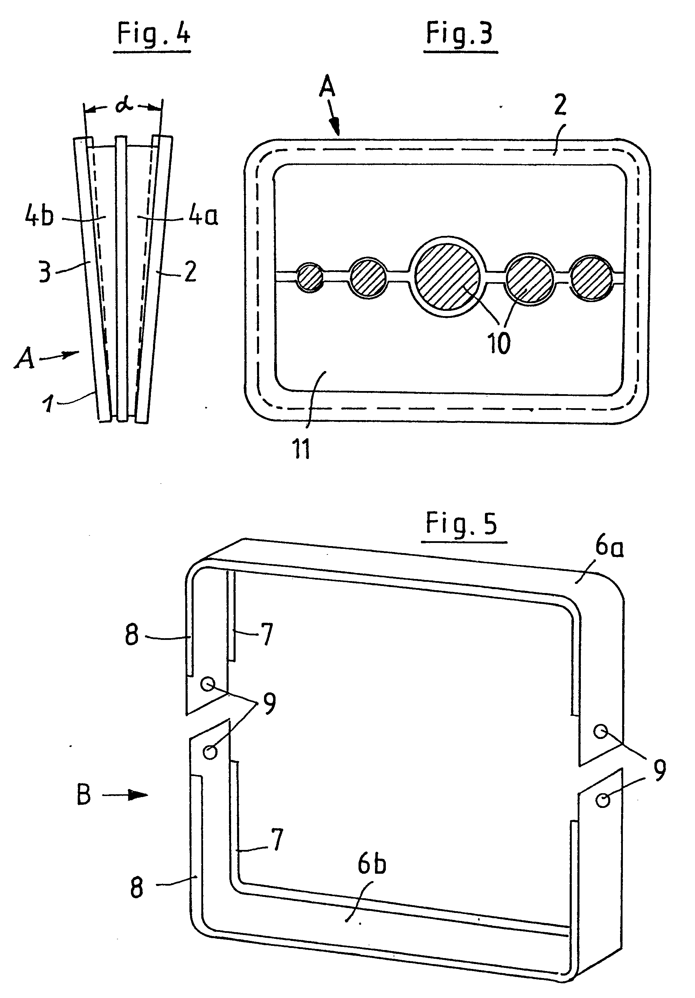

Jedes enge Rohrglied A besteht in der dargestellten Ausführungsform gemäß den Figuren 3 und 4 aus einem Ring 1, der am äußeren Umfang eine von Anschlägen 2, 3 begrenzte Rinne 4 bildet, welche durch einen in der Mittelebene angeordneten Anschlagring 5 in zwei Teilrinnen 4a und 4b aufgeteilt ist. An der Ober- und Unterseite sind die Teilrinnen 4a und 4b unterschiedlich breit und an den dazwischen liegenden Seiten konisch ausgebildet. Die beiden Anschläge 2 und 3 schließen einen Winkel $\alpha$ ein, der den Krümmungsradius R bestimmt. Eine Veränderung des Krümmungsradius R ist auf einfache Weise dadurch möglich, daß die Anschläge 2, 3 etwas verbreitert werden, wie es in der Fig. 4 mit gestrichelten Linien schematisch dargestellt worden ist.

Jedes weite Rohrglied B besteht in der Ausführungsform gemäß Fig. 5 aus zwei Rohrgliedhälften 6, die baugleich ausgebildet sind und deren Verbindungen beiderseits der mittleren Krümmungsebene liegen. Die Rohrgliedhälften 6a und 6b besitzen nach innen gerichtete Anschläge 7 und 8, welche in die Teilrinnen 4a und 4b am engen Rohrglied A eingreifen. In den Überlappungsbereichen an den Enden der Schenkel der beiden Rohrgliedhälften 6a und 6b fehlen die Anschläge 7 und 8. In den Überlappungsbereichen sind in den Außenwänden der beiden Rohrgliedhälften 6a und 6b Bohrungen 9 zum Einführen von Spreiznieten oder dgl. angeordnet. Die Schenkel einer Rohrgliedhälfte 6a oder 6b sind unterschiedlich lang ausgebildet, damit baugleiche Konstruktionsteile verwendet werden können.

Die engen Rohrglieder A bestehen vorzugsweise aus einem Isoliermaterial, insbesondere Kunststoff, so daß sie an ihrer Innenseite eine glatte und schonende Auflage für Energieleitungen 10 bilden. Es ist aber auch möglich, am Ring 1 jedes engen Rohrgliedes A nach innen vorspringende Halterungen 11 für die Energieleitungen 10 anzuformen, um diese in einer definierten Mittellage festzuhalten.

Die weiten Rohrglieder B gemäß Fig. 5 können aus dünnem Blech gestanzt oder geprägt werden. Dabei ist es möglich, in der Mitte der Rohrgliedhälften 6a und 6b nach außen vorspringende Sicken einzuprägen, welche einerseits die Formstabilität erhöhen und andererseits als Auflage für den Energieleitungsträger beim bestimmungsgemäßen Gebrauch dienen. Weiterhin ist es möglich, in die Schenkel der Rohrgliedhälften 6a und 6b Öffnungen zur Belüftung des Innenraumes vorzusehen, damit sich kein Wärmestau bilden kann.

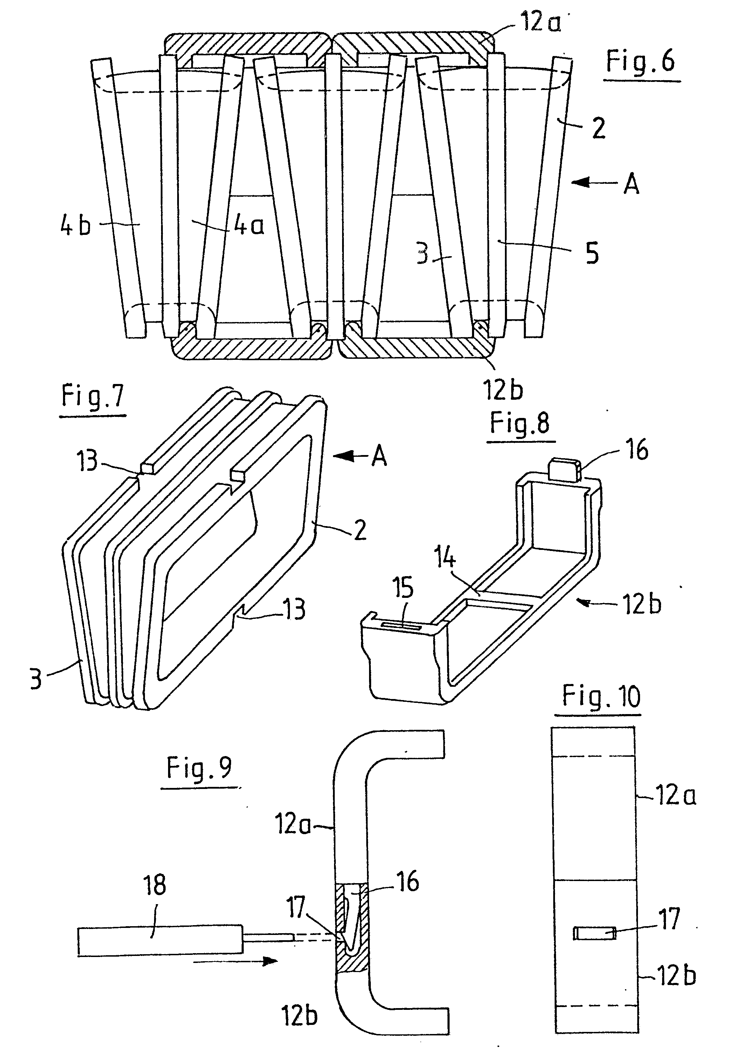

Die beiden Rohrgliedhälften 12a und 12b der weiten Rohrglieder B können aber auch aus einem Kunststoff gespritzt werden. Für diese Ausführungsform gemäß den Figuren 6—10 sind in den Anschlägen 2 und 3 der engen Rohrglieder A Nuten 13 vorgesehen, in die ein auf der Innenseite der Rohrgliedhälften 12a und 12b der weiten Rohrglieder B angeordneter Steg 14 eingreift.

Die beiden Rohrgliedhälften 12a und 12b der weiten Rohrglieder B aus Kunststoff werden mittels einer Schnappverbindung zusammengesteckt, die aus einer in einem Ende vorgesehenen Ausnehmung 15 und einem am anderen Ende angespritzten Haken 16 besteht Damit diese Schnappverbindung wieder lösbar ist, wird die Ausnehmung 15 mit einem Fenster 17 angeschnitten, in welches von außen ein Werkzeug 18 einführbar ist.

Wenn die Verbindung zwischen den beiden Rohrgliedhälften 12a und 12b eines weiten Rohrgliedes B nicht mehr gelöst werden muß, kann anstelle des Hakens 16 auch eine glatte Lasche in die Ausnehmung 15 eingeschoben und in dieser Lage mittels Ultraschall verschweißt werden.

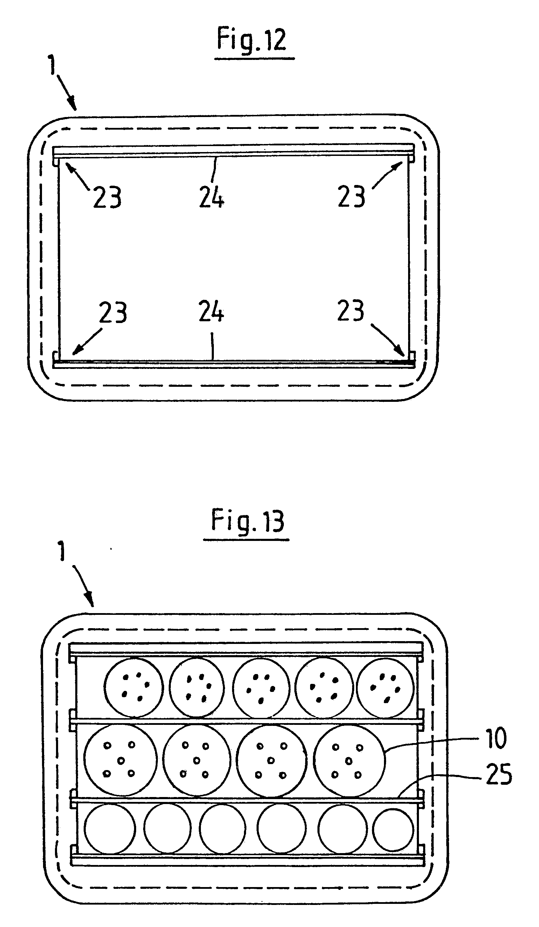

Ein nach den vorstehenden Anweisungen aufgebauter und zusammengesetzter Energieleitungsträger ist dazu bestimmt, zwischen einem ortsfesten Anschluß 19 und einem beweglichen Verbraucher 20, beispielsweise dem Support einer Werkzeugmaschine, eingesetzt zu werden, um die Energieleitungen 10, beispielsweise Kabel und Schläuche für Elektrizität, Druckluft und/oder Kühlmittel, schonend und zugentlastet zu führen (Fig. 11). Dabei muß der Energieleitungsträger im oberen Trum 21 selbsttragend sein, damit er nicht durchhängt und die Energieleitungen 10 geknickt werden. Zum unteren Trum 22 hin darf der Energieleitungsträger nur um den Radius R gekrümmt werden können, welcher dem zulässigen Biegeradius der empfindlichsten Energieleitung 10 entspricht. Die Bedingungen für eine selbsttragende Konstruktion des Energieleitungsträgers, die Einhaltung eines bestimmten Krümmungsradius sowie die schonende und zugentlastete Führung der Energieleitungen 10 werden durch die erfindungsgemäße Formgestaltung der engen Rohrglieder A und der weiten Rohrglieder B erfüllt.

In der Ausführungsform gemäß Fig. 12 ist der Ring 1 an den Seitenwänden auf der Innenseite oben und unten mit Schlitzen 23 versehen, in die je ein über die gesamte Breite reichendes Band 24 mit seinen Rändern eingreift. Die Schlitze 23 sind in der Mitte enger als am Ein- und Austritt, damit die Bänder 24 beim Durchlaufen des Krümmungsbereiches nicht geknickt werden.

Bei der in Fig. 13 dargestellten Ausführungsform des Ringes 1 sind weitere Schlitze 23 vorgesehen, so daß mehrere Zwischenbänder 25 eingezogen werden können, welche den Innenraum des Energieleitungsträgers in verschiedene Stockwerke aufteilen. Dadurch ist es möglich, unterschiedlich dicke Energieleitungen 10 auch auf großen Längen sorgfältig voneinander getrennt zu halten, damit sie nicht durcheinanderrutschen.

## Bezugszeichenliste

1 Ring
2 Anschlag
3 Anschlag
4 Rinne
4a Teilrinne
4b Teilrinne
5 Anschlagring
6a Rohrgliedhälfte
6b Rohrgliedhälfte
7 Anschlag
8 Anschlag
9 Bohrung
10 Energieleitung
11 Halterung
12a Rohrgliedhälfte
12b Rohrgliedhälfte
13 Nut
14 Steg
15 Ausnehmung
16 Haken
17 Fenster
18 Werkzeug
19 Anschluß
20 Verbraucher
21 Trum (oberes)
22 Trum (unteres)
23 Schlitz
24 Band
25 Zwischenband

A Rohrglied (enges)
B Rohrglied (weites)
R Krümmungsradius
α Winkel

## Patentansprüche

1. Energieleitungsträger für die Anordnung zwischen einem beweglichen Verbraucher (20) und einem ortsfesten Anschluß (19), bestehend aus engen Rohrgliedern (A) mit nach außen gerichteten Anschlägen (2, 3) und weiten Rohrgliedern (B) aus zwei Rohrgliedhälften (6a, 6b; 12a, 12b) mit nach innen gerichteten Anschlägen (7, 8), die sich mit den Anschlägen hintergreifen und in einer Richtung gegeneinander abwinkelbar sind, und wobei durch die Anschläge (2, 3) der engen Rohrglieder (A) eine Rinne (4) gebildet wird, deren Breite den Krümmungsradius (R) bestimmt, dadurch gekennzeichnet, daß die Rinne (4) der engen Rohrglieder (A) an zwei gegenüberliegenden Seitenwänden (Ober- und Unterseite) unterschiedlich breit und an den beiden anderen Seitenwänden keilförmig ausgebildet ist und daß die Rohrgliedhälften (6a, 6b; 12a, 12b) der weiten Rohrglieder (B) baugleich ausgebildet und um 180° gegeneinander versetzt auf die engen Rohrglieder (A) aufgeschoben und miteinander verbunden sind.

2. Energieleitungsträger nach Anspruch 1, dadurch gekennzeichnet, daß die engen Rohrglieder (A) in an sich bekannter Weise einen in ihrer senkrecht zur Längsachse liegenden Mittelebene angeordneten Anschlagring (5) besitzen, welcher die durch die Anschläge (2, 3) gebildete Rinne (4) in zwei Teilrinnen (4a, 4b) aufteilt.

3. Energieleitungsträger nach den Ansprüchen 1 und 2, dadurch gekennzeichnet, daß die Schenkel der Rohrgliedhälften (6a, 6b) eines weiten Rohrgliedes (B) unterschiedlich lang ausgebildet sind.

4. Energieleitungsträger nach den Ansprüchen 1 bis 3, dadurch gekennzeichnet, daß die Anschläge (2, 3) der engen Rohrglieder (A) an der Ober- und Unterseite in der Mitte Nuten (13) besitzen, in die ein auf der Innenseite der Rohrgliedhälften (12a, 12b) der weiten Rohrglieder (B) angeordneter Steg (14) eingreift.

5. Energieleitungsträger nach den Ansprüchen 1 bis 4, dadurch gekennzeichnet, daß die Rohrgliedhälften (12a, 12b) der weiten Rohrglieder (B) an einem Ende mit einer Ausnehmung (15) und am anderen Ende mit einem Haken (16) versehen sind.

6. Energieleitungsträger nach Anspruch 5, dadurch gekennzeichnet, daß die Ausnehmung (15) durch ein Fenster (17) angeschnitten ist, in welches der Haken (16) einrastet.

7. Energieleistungsträger nach den Ansprüchen 1 bis 6, gekennzeichnet durch in den Seitenwänden der engen Rohrglieder (A) auf der Innenseite angeordnete Schlitze (23) und in diese im Abstand voneinander und parallel zueinander eingezogene Bänder (24), die parallel zu der in bezug auf die Schwenkbewegung neutralen Mittelebene verlaufen.

8. Energieleitungsträger nach Anspruch 7, dadurch gekennzeichnet, daß die Schlitze (23) und Bänder (24) an der Ober- und Unterseite der engen Rohrglieder (A) angeordnet sind.

9. Energieleitungsträger nach Anspruch 8, gekennzeichnet durch ein oder mehrere Zwischenbänder (25).

10. Energieleitungsträger nach den Ansprüchen 7 bis 9, dadurch gekennzeichnet, daß die Schlitze (23) in ihrer Mitte eng und am Eintritt und Austritt erweitert sind.

11. Energieleitungsträger nach den Ansprüchen 7 bis 10, dadurch gekennzeichnet, daß die Bänder (24) aus Stahl oder Kunststoff bestehen.

**Claims**

1. Power-line carrier for installation between a mobile consumer (20) and a stationary connector (19), this carrier being composed of narrow tubular elements (A) with outward-directed edge portions (2, 3), and of wide tubular elements (B) composed of two tubular-element halves (6a, 6b; 12a, 12b) with inward-directed edge portions (7, 8), these tubular elements engaging behind one another by means of the edge portions and being capable of being inclined with respect to one another in one direction, and a channel (4) being defined by the edge portions (2, 3) of the narrow tubular elements (A) the width of this channel determining the radius of curvature (R), characterized in that the channel (4) of the narrow tubular elements (A) has a different width at two oppositely-located side walls (top and bottom), and is wedge-shaped at the two other side walls, and in that the tubular-element halves (6a, 6b; 12a, 12b) of the wide tubular elements (B) are made to be structurally identical and are displaced to be offset relative to one another by 180° on to the narrow tubular elements (A), and are interconnected.

2. Power-line carrier according to claim 1, characterized in that the narrow tubular elements (A) have, in a manner known per se, an abutment ring (5) which is located, in their mid-plane, this mid-plane lying perpendicular to the longitudinal axis, and dividing the channel (4), formed by the edge portions (2, 3), into two subchannels (4a, 4b).

3. Power-line carrier according to claims 1 and 2, characterized in that the limbs of the tubular-element halves (6a, 6b) of a wide tubular element (B) are constructed to be of different lengths.

4. Power-line carrier according to claims 1 to 3, characterized in that the edge portions (2, 3) of the narrow tubular elements (A) have median notches (13) on the top and bottom in which a ridge (14) located on the inside of the tubular-element havles (12a, 12b) of the wide tubular elements (B) engages.

5. Power-line carrier according to claims 1 to 4, characterized in that the tubular-element halves (12a, 12b) of the wide tubular elements (B) are provided, at one end, with a recess (15) and, at the other end, with a catch (16).

6. Power-line carrier according to claim 5, characterized in that the recess (15) is intersected by an opening (17), into which the catch (16) latches.

7. Power-line carrier according to claims 1 to 6, characterized by internal slots (23) which are located in the side walls of the narrow tubular elements (A) and by strips (24) which are inserted into these slots (23), spaced apart and parallel to one another, which extend parallel to the mid-plane which is neutral in relation to the pivotal movement.

8. Power-line carrier according to claim 7, characterized in that the slots (23) and strips (24) are located at the top and bottom of the narrow tubular elements (A).

9. Power-line carrier according to claim 8, characterized by one or more intermediate strips (25).

10. Power-line carrier according to claims 7 to 9, characterized in that, in their middle, the slots (23) are narrow, and are widened at their entry and exit.

11. Power-line carrier according to claims 7 to 10, characterized in that the strips (24) are composed of steel, or of plastics.

## Revendications

1. Support de conduites d'énergie pour la disposition entre un récepteur mobile (20) et une connexion fixe (19), constitué par des éléments tubulaires étroits (A) avec des butées (2, 3) dirigées vers l'extérieur et des éléments tubulaires larges (B) comprenant deux moitiés d'élément tubulaire (6a, 6b; 12a, 12b) avec des butées (7, 8) dirigées vers l'intérieur, éléments qui s'engagent par les butées et qui peuvent jouer angulairement l'un par rapport à l'autre dans un sens, une goulotte (4) dont la largeur détermine le rayon de courbure (R) étant formée par les butées (2, 3) des éléments tubulaires étroits (A), caractérisé en ce que la goulotte (4) des éléments tubulaires étroits (A) est réalisée avec une largeur différente sur deux parois latérales opposées (côté supérieur et côté inférieur) et en forme de coin sur les deux autres parois latérales et en ce que les moitiés d'élément tubulaire (6a, 6b; 12a, 12b) des éléments tubulaires larges (B) sont réalisées avec la même structure et sont engagées sur les éléments tubulaires étroits (A) en étant décalées de 180° l'une par rapport à l'autre et en étant assemblées entre elles.

2. Support de conduites d'énergie selon la revendication 1, caractérisé en ce que les éléments tubulaires étroits (A) comportent de façon en soi connue une couronne de butée (5) disposée dans leur plan médian perpendiculaire à l'axe longitudinal, couronne qui divise en deux goulottes élémentaires (4a, 4b) la goulotte (4) formée par les butées (2, 3).

3. Support de conduites d'énergie selon les revendications 1 et 2, caractérisé en ce que les branches des moitiés d'élément tubulaire (6a, 6b) d'un élément tubulaire large (B) sont réalisées avec une longueur différente.

4. Support de conduites d'énergie selon les revendications 1 à 3, caractérisé en ce que les butées (2, 3) des éléments tubulaires étroits (A) présentent au milieu, sur leur côté supérieur et leur côté inférieur, des rainures (13) dans lesquelles s'engage une nervure (14) disposée sur le côté intérieur des moitiés d'éléments tubulaires (12a, 12b) des éléments tubulaires larges (B).

5. Support de conduites d'énergie selon les revendications 1 à 4, caractérisé en ce que les moitiés d'élément tubulaire (12a, 12b) des éléments tubulaires larges (B) sont munies d'un évidement (15) à une extrémité et d'un crochet (16) à l'autre extrémité.

6. Support de conduites d'énergie selon la revendication 5, caractérisé en ce que l'évidement (15) est recoupé par une fenêtre (17) dans laquelle s'enclenche le crochet (16).

7. Support de conduites d'énergie selon les revendications 1 à 6, caractérisé par des fentes (23) disposées du côté intérieur dans les parois latérales des éléments tubulaires étroits (A) et par des bandes (24) introduites dans ces fentes à distance l'une de l'autre et parallèlement entre elles, ces bandes s'étendant parallèlement au plan médian neutre par rapport au mouvement de pivotement.

8. Support de conduites d'énergie selon la revendication 7, caractérisé en ce que les fentes (23) et les bandes (24) sont disposées sur le côté supérieur et le côté inférieur des éléments tubulaires étroits (A).

9. Support de conduites d'énergie selon la revendication 8, caractérisé par une ou plusieurs bandes intermédiaires (25).

10. Support de conduites d'énergie selon les revendications 7 à 9, caractérisé en ce que les fentes (23) sont étroites en leur milieu et élargies à l'entrée et à la sortie.

11. Support de conduites d'énergie selon les revendications 7 à 10, caractérisé en ce que les bandes (24) sont constituées en acier ou en matière plastique.

Fig. 1

Fig. 2

Fig. 11

Fig.4   Fig.3

d

4b   4a
3   2
A
1

A
2

10

11

Fig.5

6a
8   7
9
B
9
7
8   6b
9

Fig. 6

12a

2

A

4b

4a

3

5

12b

Fig. 7

13

A

2

3

13

Fig. 8

16

14

15

12b

Fig. 9

Fig. 10

12a

18

12a

16

17

17

12b

12b

11

## Fig.12

## Fig.13